# EUROPÄISCHE PATENTSCHRIFT

(11) **EP 1 480 810 B1**
(45) Veröffentlichungstag und Bekanntmachung des Hinweises auf die Patenterteilung: **06.12.2006**
(21) Anmeldenummer: 03701419.8
(22) Anmeldetag: 14.02.2003
(51) Int. Cl.: B29C 49/58

(54) **HALTERUNG FÜR DIE BLASDORNE EINER BLASFORMEINRICHTUNG**
MOUNTING FOR THE BLOWING MANDREL ON A BLOW-MOULDING DEVICE
FIXATION POUR LES MANDRINS DE SOUFFLAGE D'UNE INSTALLATION DE MOULAGE PAR SOUFFLAGE

(30) Priorität: 04.03.2002 CH 371022002
(43) Veröffentlichungstag der Anmeldung: 01.12.2004
(73) Patentinhaber: SOPLAR SA, CH-9450 Altstätten (CH)
(72) Erfinder: KÜNZ, Johann, A-6971 Hard (AT)
(74) Vertreter: Schreiber, Wolfgang
(86) Internationale Anmeldenummer: PCT/CH2003/000106
(87) Internationale Veröffentlichungsnummer: WO 2003/074256

(56) Entgegenhaltungen:
- WO-A-01/62472
- DE-A- 19 732 905
- DE-A- 19 846 594

## Beschreibung

Die Erfindung betrifft eine Halterung für die Blasdorne einer Blasformeinichtung zur Herstellung von Hohlkörpern aus thermoplastischem Kunststoff gemäss dem Oberbegriff des Patentanspruchs 1.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältriissen, insbesondere von Kunststoffflaschen, beim Konsumenten zu fördern.

Die Herstellung von Kunststoffbehältnissen, insbesondere Kunststoffflaschen, erfolgt üblicherweise in einem Streckblasverfahren oder in einem Extrusionsblasverfahren. Beim Streckblasverfahren wird ein einseitig offener, getrennt im Spritzgiessverfahren hergestellter, überwiegend zylindrischer Vorformling in eine Blasform eingebracht. Danach wird ein Blasdorn durch die Öffnung in den Vorformling eingefahren. Der erwärmte Vorformling wird durch Strecken und Aufblasen mit Überdruck gemäss der Formkavität umgeformt. Beim Extrusionsblasverfahren wird ein ein- oder mehrschichtig extrudierter Vorformling, beispielsweise ein Schlauch, in eine Blasform eingebracht und über einen Blasdorn durch Überdruck gemäss der Formkavität aufgeblasen. Je nachdem, ob der schlauchförmige Vorformling kontunuierlich extrudiert oder entweder vor der Schnekkenspitze oder in einem speziell dafür ausgebildeten Extrusionskopf zwischengespeichert und spontan "portionsweise" in die Blasformkavität ausgestossen wird, bezeichnet man das Verfahren als kontunuierlichens oder diskontinuierliches Extrusionsblasverfahren.

Die dafür eingesetzten Blasformeinrichtungen weisen oft Mehrfachformwerkzeuge mit mehreren Blasformkavitäten auf, die es erlauben, in einem Arbeitsgang gleichzeitig mehrere Kunststoffbehältnisse herzustellen. Dabei ist jeder Blasformkavität wenigstens ein separater Blasdorn zugeordnet, der prozessgerecht zustellbar ist.

Hohlkörper aus Kunststoff, wie z. B. Flaschen oder Kanister, aber auch technische Teile besitzen in vielen Fällen eine oder mehrere Öffnungen, die bei der späteren Verwendung einen bestimmten Zweck erfüllen. Vielmals werden derartige Öffnungen derart ausgebildet, dass sie durch geeignete Schliessvorrichtungen verschliessbar sind. Dies können beispielsweise Schraub- oder Schnappverschlüsse sein. Eine wesentliche Anforderung an die Verschliessteclrnik ist dabei die Dichtheit gegenüber Flüssigkeiten, Gasen und festen Stoffen in pulvriger oder körniger Form. Bei Kunststoffverpackungen wird die Dichtheit überlicherweise dadurch bewerkstelligt, dass sowohl beim Hohlköper alsauch beim Verschluss glatte, massgenaue und aufeinander abgestimmte Dichtflächen erzeugt werden. Durch die Wahl der richtigen Materialkombination von Hohlkörper und Verschluss kann dabei bekanntermassen die Dichtungsqualität noch weiter verbessert werden.

Die Herstellung derartig gestalteter Öffnungen kann vorzugsweise gleichzeitig mit dem Herstellungsprozess oder aber durch mechanische Nachbearbeitung des Hohlkörpers erfolgen. Dabei wird die Öffnung für das Einbringen des den Überdruck erzeugenden Aufblasmediums, in den meisten Fällen Druckluft, gleich derart gestaltet, dass sie auch den späteren Anforderungen an die Benützung des Hohlkörpers genügt. Die Dichtflächen, die sowohl an der Stirnfläche als auch an der vorzugsweise zylindrischen oder konischen Innenwandung eines die Öffnung berandenden Halses vorgesehen sein können, werden in einem sogenannten Kalibriervorgang hergestellt, also durch eine massliche Abstimmung eines Teilbereichs des als Kalibriereinrichtung wirkenden Blasdorns mit dem Mündungsbereich der Blasformwerkzeuge und der vorgegebenen Wandstärke des in die Blasformwerkzeuge eingesetzten Vorformlings. Der Blas- und Kalibrierdorn hat darüber hinaus auch die Aufgabe, prozessbedingte, überstehende Teile des Vorformlings im oberen Randbereich der Mündung bis auf eine minimale Restdicke vom Hohlkörper abzuquetschen, damit diese in einem dem Aufblasvorgang nachgeschalteten Entgratungsprozess einwandfrei abgestanzt werden können.

Für beide Vorgänge, das Kalibrieren der Öffnung und das Abquetschen überstehender Teile, ist es erforderlich, dass der Blas- und Kalibrierdorn in drei Ebenen eine sehr genaue und reproduzierbare Position gegenüber der Mündung des Blasformwerkzeugs einnimmt. Insbesondere muss die Achse des Blas- und Kalibrierdorns mit der Mündungsachse der Kavität im Blasformwerkzeug übereinstimmen; die Schneidringfläche des Blas- und Kalibrierdorns muss parallel zur Halsmesserfläche des Blasformwerkzeug sein und die Höhen-Endposition des Blas- und Kalibrierdorns muss gegenüber der Mündung des Blasformwerkzeugs immer exakt diejenige Stellung einnehmen, bei der sowohl die Abmessungstoleranzen des fertigen Hohlkörpers eingehalten werden als auch das Abquetschen der überstehenden Teile gewährleistet ist. In der Praxis wird dies durch Einstellen eines mechanischen Endanschlags für den Blas- und Kalibrierdorn erreicht. Die Einstellung erfolgt dabei vielfach manuell, nach Massgabe einer optischen Beurteilung des Abquetschvorgangs und der masslichen Kontrolle der Mündung des Hohlkörpers durch das Bedienpersonal. Bei einer Einfach-Blasvorrichtung, die nur einen einzigen Blas- und Kalibrierdorn aufweist, sind die beiden Qualitätsanforderungen bezüglich der Öffnung bzw. bezüglich der überstehenden Teile noch relativ einfach gleichzeitig erfüllbar. Bei Blasformautomaten mit mehreren parallel angeordneten Blasformwerkzeugen und diesen zugeordneten Blas- und Kalibrierdornen ist der Einstellvorgang jedoch nur sehr schwierig und zeitaufwendig zu bewerkstelligen. Mit Hinblick auf die Qualitätsanforderungen an den Abquetschvorgang müssen die einzelnen Blas- und Kalibrierdorne alle auf die richtige Höhe in Bezug auf die Mündungen der Kavitäten in den Blasformwerkzeugen eingestellt werden. Dabei ist zu berücksichtigen, dass Massunterschiede an den Mündungen der einzelnen Blasformwerkzeuge, die allein schon durch die üblichen Fertigungstoleranzen oder durch die Abnutzung bedingt sind, unterschiedliche Höheneinstellungen der Blas- und Kalibrierdorne erzwingen. Wegen der Verletzungsgefahr des Bedienpersonals sind die mechanisch miteinander zusammenwirkenden Bestandteile dieser Mehrfach-Blasautomaten durch Abdeckvorrichtungen vor einem unbefugten oder auch unbeabsichtigten Zugriff geschützt. Diese baulichen Schutzmassnahmen stehen jedoch einer praktikablen Einstellmöglichkeit, die mit Vorteil an der laufenden Maschine erfolgen soll, entgegen.

Aus der WO 01/62472 ist es mittlerweile auch bekannt, die Blas- und Kalibrierdorne innerhalb vorgebbarer Grenzen axial frei beweglich zu haltern. Beim gemeinsamen Zustellen der Blas- und Kalibrierdorne gegen die Blasformkavitäten sind die Blas und Kalibrierdorne gegen den Widerstand eines Kopplungsmediums, vorzugsweise einer Hydraulikflüssigkeit, automatisch innerhalb der vorgebbaren Grenzen gegenüber ihrer Ausgangsstellung axial höhenverstellbar. Daraus resultiert eine automatische Selbsteinstellung der Blasdorne, die eine korrekte Höhenlage der Blasdorne gewährleistet.

Aus montagetechnischen Gründen und zur Wartung sind die Blas- und Kalibrierdorne lösbar in der Blasformeinrichtung gehaltert. Dabei sind sie bei einer modernen Vorrichtung, wie sie beispielsweise in der WO 01/62472 beschrieben ist, durch mechanische Klemmung in ihren Halterungen fixiert. Die Klemmkraft ist dabei derart gewählt, dass die Blas- und Kalibrierdorne sich durch ihr Gewicht und die dynamischen Kräfte bei den Bewegungsvorgängen nicht unbeabsichtigt verstellen können. Das Herausfallen der Blas- und Kalibrierdorne aus der Blasformvorrichtung ist durch Anschläge verhindert. Die mechanische Klemmhalterung umfasst eine mit einem Aussengewinde versehene Haltemutter, die in eine Gewindebohrung im Maschinenoberteil einschraubbar ist. Die Haltemutter besitzt eine Kegelfläche, die mit einem radial komprimierbaren Klemmelement mit einer konischen Gegenfläche zusammenwirkt. Die zusammenwirkenden Kegelflächen lenken die vom Anzugsmoment der Haltemutter resultierende Kraft um und sorgen durch die radiale Verengung des Klemmelements für die erforderliche Klemmkraft. Ein Vorspannelement, beispielsweise eine Tellerfeder, gleicht Masstoleranzen und Ungleichmässigkeiten in der Gewindeausbildung, der Gewindebohrung im Maschinenoberteil und an der Haltemutter aus.

Die mechanische Klemmhalterung bietet die Möglichkeit einer verspannungsfreien Halterung der Blas- und Kalibrierdorne und erlaubt es, Masstoleranzen auszugleichen. Müssen einzelne oder alle der Blas- und Kalibrierdorne ausgetauscht werden oder sollen einzelne oder alle der Blasdorne in ihrer Lage verändert werden, beispielsweise um ihre Längsachse gedreht werden, muss die mechanische Klemmhalterung jedes einzelnen betroffenen Blasdorns geöffnet werden, um die erforderliche Änderung durchzuführen. Danach muss jede mechanische Klemmhalterung wieder geschlossen und im erforderlichen Ausmass angezogen werden.

Aus der DE-A-197 32 905 ist eine Blasdornhalterung bekannt, bei der die Blasdorne jeweils in einer Führungshülse geführt sind. Jeder Blasdorn ist über eine Schraubendruckfeder in seine Grundstellung vorgespannt. Eine axiale Fixierung der Blasdorne entfällt. Die Führungshülse mit dem vorgespannten Blasdorn ist in beliebiger Richtung relativ zu einer Basis an einer Kalibriervorrichtung geführt und fixierbar. Nicht die Blasdorne sondern die Führungshülsen für die Blasdorne sind durch Strömungsmitteldruck fixierbar. In einer Variante dieser bekannten Blasdornhalterung kann vorgesehen sein, jeden Blasdorn zusätzlich über eine hydraulische Spannhülse axial zu fixieren. Die bekannte Blasdornhalterung ist eine Kombination von klassischen, rein mechanischen Halterungen mit Spannfeder, Anschlagflanschen, Überwurfmuttern und Hydraulikelementen. Der Aufbau dieser bekannten Blasdornhalterung ist sehr aufwändig, kompliziert und wartungsunfreundlich. Beispielsweise können die Blasdorne erst nach dem Lösen der Überwurfmuttern ausgebaut werden.

Die in der DE-A-198 46 594 beschriebene Blasdornhalterung stellt eine Weiterentwicklung der Halterung der DE-A-197 32 905 dar und besitzt weitgehend den gleichen Aufbau. Die Blasdorne sind wiederum durch Schraubendruckfedern in ihre Grundstellung vorgespannt. Die Führungshülsen sind nach der Kalibrierung der Blasdorne fixierbar. An jeder Führungshülse ist ein spannhülsenartiger Bereich ausgebildet, in dem ein durch Federdruck radial einwärts belastetes Klemmelement ausgebildet ist. Durch Strömungsmitteldruck ist das Klemmelement in seine Lösestellung überführbar. Eine zentral gesteuerte, durch Strömungsmitteldruck bewirkte Fixierung der Blasdorne ist nicht vorgesehen und kommt bei der vorgeschlagenen Lösung nicht in Frage. Auch diese bekannte Blasdornhalterung besitzt einen technisch sehr aufwändigen und komplizierten Aufbau.

Aufgabe der vorliegenden Erfindung ist es daher, eine Blasformeinrichtung hinsichtlich der Halterung ihrer Blas- und Kalibrierdorne zu verbessern. Der Aufwand für den Ausbau oder eine Lageveränderung der Blasdorne soll vereinfacht werden. Die Klemmkraft für die Blasdorne soll einfach verstellbar sein. Die relative Höhenlage der Blasdorne soll durch die Klemmung nicht beeinträchtigt werden.

Die Lösung dieser Aufgaben besteht in einer Halterung für die Blasdorne einer Blasformeinrichtung, welche die im kennzeichnenden Abschnitt des Patentanspruchs 1 angeführten Merkmale aufweist. Bevorzugte Ausführungsvarianten und/oder vorteilhafte Weiterbildungen der Erfindung sind Gegenstand der abhängigen Patentanprüche.

Durch die Erfindung wird eine Halterung für die Blasdorne einer Blasformeinrichtung vorgeschlagen, die ein Maschinenunterteil, in dem Blasformwerkieuge mit Blasformkavitäten angeordnet sind, und ein oberhalb des Maschinenunterteils angeordnetes Maschinenoberteil aufweist, in dem eine Anzahl von Blasdornen durch Klemmung gehalten ist. Die Blasdorne sind gemeinsam axial auf die Blasformwerkzeuge zustellbar und in eine Mündung der Kavitäten einfahrbar. Die Halterung der Blasdorne ist frei von axial verstellbaren, mechanischen Vorspannmitteln und erfolgt über Klemmeinrichtungen, die über ein gemeinsames Kopplungsmedium betätigbar sind.

Die zentrale Halterung der Blas- und Kalibrierdorne über ein Kopplungsmedium reduziert den Aufwand für die Wartung, beispielsweise den Ausbau, oder für eine Lageveränderung der Blasdorne. Es muss nicht mehr die Halterung eines jeden der betroffenen Blasdorne gelöst werden. Es genügt eine zentrale Manipulation des Kopplungsmediums, um die Halterung aller Blasdorne zu lösen bzw. wieder zu aktivieren. Durch die zentrale Verstellbarkeit ist auch die Voraussetzung für eine einfache Veränderung der Klemmkraft für die Blasdorne gegeben. Dabei ist durch das Kopplungsmedium gewährleistet, dass jeder Blasdorn im wesentlichen mit der gleichen Klemmkraft gehalten wird. Die Halterung der Blasdorne erfolgt im allgemeinen durch eine Druckveränderung des innerhalb eines Leitungssystems angeordneten Kopplungsmediums. Von aussen axial verstellbare Vorspannfedern, Klemmmuttern oder dergleichen Klemmmittel an jedem Blasdorn entfallen. Dies hat auch den Vorteil, dass durch die Klemmung der Blasdorne deren relative Höhenlage nicht beeinträchtigt wird.

Das Kopplungsmedium kann ein gasförmiges oder ein flüssiges Medium sein. Vorzugsweise wird eine Hydraulikflüssigkeit eingesetzt. Die Kopplung der Halterungen über eine Hydraulikflüssigkeit erlaubt eine sehr einfache Regelung der Klemmung der Blasdorne mit Hilfe erprobter Einrichtungen. Für die Hydraulikflüssigkeit kann eine Entgasungseinrichtung vorgesehen sein.

In einer ersten Ausführungsvariante der Erfindung sind die Klemmeinrichtungen radial zustellbar und über ein Kopplungsmedium gekoppelt, das in einem Bohrungssystem im Maschinenoberteil angeordnet ist. Jeder Blasdorn ist von wenigstens einer Klemmbacke geklemmt, die über das Kopplungsmedium druckbeaufschlagt ist und den Blasdorn gegen einen Anschlag presst. Der Anschlag kann eine Fixanschlag sein. In einer vorteilhaften Ausführungsvariante ist der Anschlag radial verstellbar. Beispielsweise wird dabei der Anschlag von einer von aussen betätigbaren Stellschraube gebildet. Die Verstellbarkeit des Anschlags bietet die Möglichkeit, fertigungsbedingte Toleranzen auszugleichen. Die Klemmung der Blasdorne erfolgt über möglichst wenige Zwischenstufen. Dadurch reagiert das System sehr genau, und eine Druckveränderung des Kopplungsmediums wird ohne grosse Verzögerung an die Klemmbacken weitergegeben.

Für eine möglichst sichere Halterung der Blasdorne erweist es sich als zweckmässig, wenn jeder Blasdorn von zwei Klemmbacken gehalten ist, die vom Kopplungsmedium druckbeaufschlagt sind. Die Klemmbacken greifen an einander diagonal gegenüberliegenden Bereichen des Umfangs des Blasdorns an. Durch die gewählte Anordnung mehrerer Klemmbacken ist für eine zentrierte Klemmung der Blasdorne in den Aufnahmebohrungen gesorgt. Dies erleichtert die Ausrichtung der Blasdorne mit Bezug auf die Mündungen der Blasformkavitäten.

Die Klemmbacken wirken mit Stellkolben zusammen, die in direktem Kontakt mit dem Kopplungsmedium in den Bohrungen im Maschinenoberteil verschiebbar geführt sind. Vorzugsweise sind die Klemmbacken Bestandteile der Stellkolben. Durch diese Bauweise ist die Anzahl der erforderlichen Bauteile reduziert. Mechanische Übertragungs- und Zwischenglieder können entfallen.

Zwar ist in der Regel eine relativ kurze Ansprechzeit auf Druckveränderungen des Kopplungsmediums beabsichtigt. Damit insbesondere bei gasförmigen Kopplungsmedien zufällig auftretende Druckschwankungen kompensierbar sind, erweist es sich von Vorteil, für das Kopplungsmedium einen Speicher vorzusehen. Dabei wirken Steuerventile mit einer zentralen Druckregelung zusammen.

In einer alternativen Ausführungsform der Erfindung umfasst die Klemmeinrichtung für die Blasdorne jeweils ein radial komprimierbares Klemmelement, das mit einem pneumatisch oder hydraulisch axial zustellbaren Stempel zusammenwirkt. Eine vorteilhafte Variante dieser Ausführungsform benutzt dabei im wesentlichen Elemente, die bereits für axiale Halterungen von Blasdornen aus dem Stand der Technik (z.B. WO 01/62472) bekannt sind. Dabei ist das radial komprimierbare Klemmelement als ein mit einer konischen Gegenfläche versehener, geschlitzter Kegel aus einem elastischen und verschleissfesten Material, vorzugsweise einem technischen Kunststoff, ausgebildet. Der axial zustellbare Stempel weist eine korrespondierende Gegenfläche auf, die beim axialen Zustellen mit der Kegelfläche zusammenwirkt. Bei diesem vorteilhaften Ausführungsbeispiel ersetzt der axial zustellbare Stempel die sonst erforderliche, in eine Gewindebohrung einschraubbare Haltemutter. Die konische Wirkfläche der Haltemutter ist durch die konische Gegenfläche am Druckkolben ersetzt.

Es kann vorgesehen sein, die Klemmkraft für die Blasdorne an jedem einzelnen Blasdorn zu verstellen. In einer zweckmässigen und sehr einfachen Ausführungsvariante der Erfindung ist die Halterung mit Mitteln versehen, die es erlauben, den Druck des Kopplungsmediums innerhalb der Bohrungen im Maschinenoberteil zentral zu verstellen. Vorzugsweise ist die Klemmkraft dabei stufenlos regelbar. Durch diese Lösung ist mit einfachen Mitteln für alle Blasdorne im wesentlichen die gleiche Klemmkraft einstellbar. Zum Lösen und Auswechseln oder für eine Lageveränderung der Blasdorne reicht es aus, die zentralen Verstellmittel zu betätigen. Der Aufbau der Klemmung erfolgt in analoger Weise, indem die zentralen Verstellmittel für den Druckaufbau im Kopplungsmedium betätigt werden. Beispielsweise ist der Druck des Kopplungsmediums mechanisch über eine Stellschraube oder einen über einen Hebel oder dergleichen, von aussen betätigbaren Druckkolben veränderbar, die bzw. der in einem Bohrungsabschnitt für das Kopplungsmedium vorgesehen ist. Es können aber auch pneumatisch wirkende Verstellmittel für die Druckkolben vorgesehen sein. Im Fall eines hydraulischen Kopplungsmediums ist derart ein pneumatisch-hydraulisches Hybridsystem gebildet.

Damit der Druck, mit der die Klemmeinrichtungen die Blasdorne halten nicht versehentlich übermässig hoch wird, ist mit Vorteil eine Druckbegrenzereinrichtung für das Kopplungsmedium vorgesehen ist. Diese kann beispielsweise als ein pneumatisches oder hydraulisches Sicherheitsdruckventil oder dergleichen ausgebildet sein.

Die Klemmkraft für die Blasdorne ist gerade so gross, dass beim Zustellen der Blasdorne auf die Blasformwerkzeuge eine axiale Verstellbarkeit der Blasdorne innerhalb vorgebbarer Grenzen gewährleistet ist. Die Höhenverstellbarkeit beträgt dabei beispielsweise bis etwa ± 4 mm. Selbstverständlich kann auch eine grössere Verstellbarkeit vorgesehen sein. Die axiale Höhenverstellung der Blasdorne erfolgt in einer zweckmässigen Ausführungsvariante der Erfindung gegen den Widerstand eines, vorzugsweise hydraulischen, Kopplungsmittels. Dabei ist die Höhenverstellbarkeit der Blasdorne untereinander gekoppelt, indem das hydraulische Kopplungsmittel in einem separaten, kommunizierenden Bohrungssystem angeordnet ist. Dies erlaubt eine automatische Ausrichtung der Blasdorne auf die jeweiligen geometrischen Gegebenheiten, insbesondere einen automatischen Ausgleich von Abstandstoleranzen zu den Mündungen der Blasformkavitäten.

Im folgenden wird die Erfindung anhand eines in den Fig. dargestellten Ausführungsbeispiels näher erläutert. Es zeigen in z. T. schematischer, nicht-massstabsgetreuer Darstellung:
- Fig.1: einen Abschnitt eines Maschinenoberteils mit Halterungen für Blasdorne in vertikal geschnittener Darstellung;
- Fig. 2: einen Horizontalschnitt des Maschinenoberteils gemäss Schnittline II-II in Fig.1;
- Fig. 3: eine erste Ausführungsvariante einer Halterung für einen Blasdorn im Vertikalschnitt; und
- Fig. 4: eine zweite Auführungvariante der Halterung des Blasdorns in einer Darstellung analog zu Fig. 3.

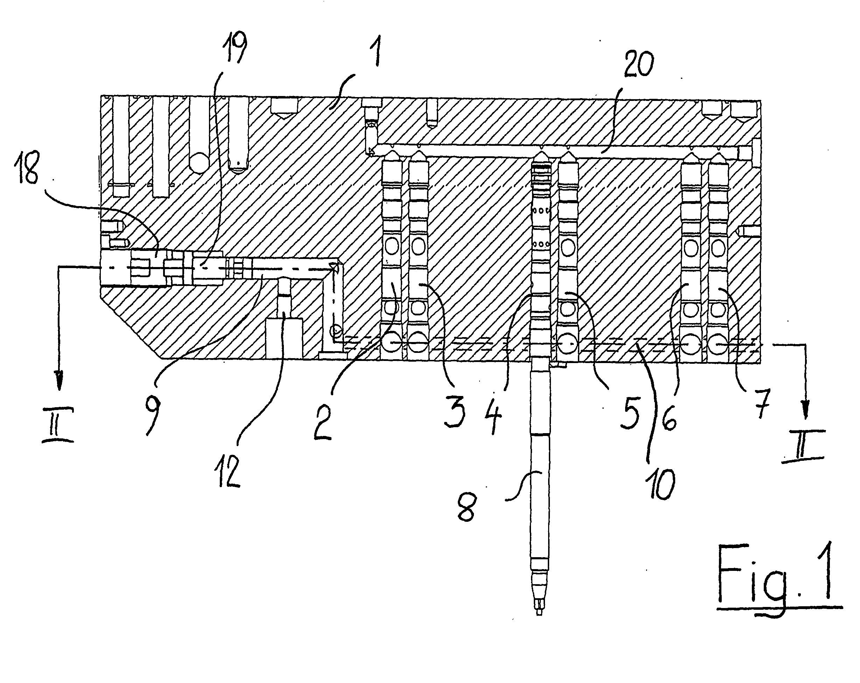

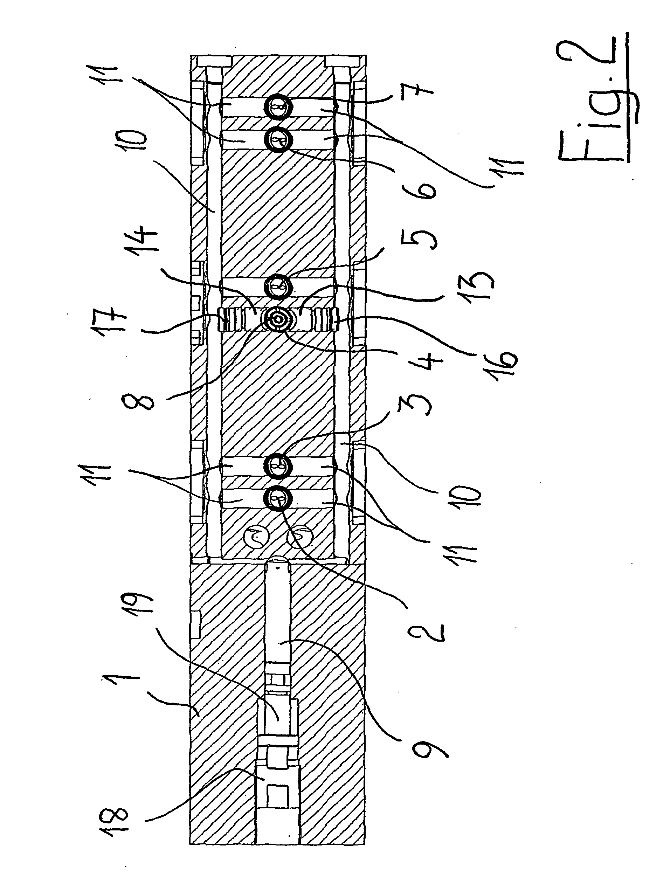

Die Schnittdarstellungen in Fig. 1 und 2 zeigen ein gesamthaft mit dem Bezugszeichen 1 versehenes Maschinenoberteil einer Blasformmaschine zur Herstellung von Hohlkörpern, insbesondere Flaschen und dergleichen mit einer Entleeröffnung versehenen Behältnissen, aus thermoplastischem Kunststoff. Insbesondere handelt es sich bei der beispielhaft dargestellten Vorrichtung um das Maschinenoberteil 1 für eine Blasformmaschine zur Herstellung von Zweikammerbehältern. Dazu sind im Maschinenoberteil 1 vertikal verlaufende Aufnahmebohrungen 2 - 7 vorgesehen, die jeweils paarweise nebeneinander angeordnet sind und zur Aufnahme der Blasdorne dienen. In Fig. 1 und 2 ist jeweils nur ein einziger Blasdorn 8 angedeutet, der in einer mit dem Bezugszeichen 4 bezeichneten Aufnahmebohrung gehalten ist.

Die Blasformmaschine umfasst auch ein nicht näher dargestelltes, tischartig ausgebildetes Maschinenunterteil, das mit einem oder mehreren Blasformwerkzeugen ausgestattet ist. Das bzw. die Blasformwerkzeuge ist bzw. sind mit einer oder mehreren gleichartigen Kavitäten versehen, welche die spätere Form des herzustellenden Hohlkörpers festlegt. Die Kavitäten münden an der Oberseite des tischartigen Maschinenunterteils und weisen dort Mündungen auf, die dem Maschinenoberteil 1 zugewandt sind. Dabei sind die Mündungen derart ausgerichtet, dass die vom Maschinenoberteil 1 abragenden Blasdorne 8 paarweise in die Mündungen einfahrbar sind. Es versteht sich, dass im Fall einer Blasformmaschine für die Herstellung von Einkammerbehältern pro Kavität und Mündung auch nur ein einziger Blasdorn 8 vorgesehen ist.

Die Halterung der Blasdorne 8 in den vertikal verlaufenden Aufnahmebohrungen 2-7 erfolgt durch Klemmung. Fig. 2 zeigt zwei radiale Klemmbacken 13,14, die in im wesentlichen horizontal zu den Blasdornen 8 verlaufenden Bohrungen 11 angeordnet sind und am Umfang des Blasdorns 8 angreifen. Insbesondere sind die radialen Klemmbacken 13, 14 einander etwa diagonal gegenüberliegend angeordnet. Dies erleichtert die Herstellung der radialen Bohrungen 11 und die Zentrierung des von den radialen Klemmbacken 13, 14 geklemmten Blasdorns 8. Die radialen Klemmbacken 13, 14 zur Klemmung aller Blasdorne 8 sind über ein Kopplungsmedium, vorzugsweise über eine Hydraulikflüssigkeit, betätigbar, das in einem zusammenhängenden Bohrungssystem 9, 10 angeordnet ist. Das Bohrungssystem umfassst eine zentrale Versorgungsbohrung 9 und davon abzweigende Verteilkanäle 10, die mit den horizontalen Bohrungen 11, in denen die radialen Klemmbacken angeordnet sind, in Verbindung stehen. Über das Kopplungsmedium sind die Klemmbacken 13, 14 radial auf den Umfang der Blasdorne 8 zustellbar. Dabei erfolgt die Verstellung der Klemmbacken 13, 14 an allen Blasdornen 8 gleichzeitig. Die Klemmbakken 13, 14 sind mit Stellkolben 16, 17 verbunden, die in direktem Kontakt mit dem Kopplungsmedium stehen und in den horizontalen Bohrungen 11 verschiebbar sind. Klemmbacken 13,14 und Stellkolben 16,17, bilden dabei vorzugsweise eine Einheit.

Der Druck des Kopplungsmediums im Bohrungssystem 9, 10 ist zentral verstellbar. Dazu ist die Versorgungsbohrung 9 im Bereich ihrer Mündung am Maschinenoberteil 1 mit einem Innengewinde versehen. Eine mit einem Aussengewinde versehene Stellschraube 18 ist mehr oder weniger weit in die Versorgungsbohrung einschraubbar. Dadurch wird ein mit der Stellschraube 18 verbundener Druckkolben 19, der in der Versorgungsbohrung 9 geführt ist, verschoben. Dies erlaubt eine sehr einfache und effektive, stufenlose Verstellung des Drucks des Kopplungsmediums im Bohrungssystem 9, 10 und dadurch eine stufenlose Verstellung der Klemmkraft der Klemmbacken 13, 14. Der Druck des Kopplungsmediums im Bohrungssystem 9, 10 ist beispielsweise an einem Manometer ablesbar, welches in einer dafür an der Versorgungsbohrung 9 vorgesehenen Anschlussbohrung 12 (Fig. 1) montierbar ist. Für die Druckverstellung kann auch ein von aussen betätigbarer Drehschalter mit einer Schalteinteilung vorgesehen sein. Im Fall eines gasförmigen Kopplungsmediums ist das Bohrungssystem 9, 10 im oberen Maschinenteil 1 mit einem Reservoir für das Kopplungsmedium verbunden. Die Druckverstellung kann in diesem Fall zentral und vorzugsweise automatisch geregelt erfolgen.

Die Klemmkraft, mit der die Blasdorne 8 von den Klemmbacken 13, 14 gehalten sind, ist gerade so gross, dass beim Zustellen der Blasdorne auf die Blasformwerkzeuge eine axiale Verstellbarkeit der Blasdorne 8 innerhalb vorgebbarer Grenzen gewährleistet ist. Die Höhenverstellbarkeit beträgt dabei beispielsweise bis etwa ± 4 mm. Selbstverständlich kann auch eine grössere Verstellbarkeit vorgesehen sein. Die axiale Höhenverstellung der Blasdorne erfolgt in einer zweckmässigen Ausführungsvariante der Erfindung gegen den Widerstand eines, vorzugsweise hydraulischen, Kopplungsmittels. Dabei ist die Höhenverstellbarkeit der Blasdorne 8 untereinander gekoppelt, indem das hydraulische Kopplungsmittel in einem separaten, kommunizierenden Bohrungssystem 20 angeordnet ist. Dies erlaubt eine automatische Ausrichtung der Blasdorne 8 auf die jeweiligen geometrischen Gegebenheiten, insbesondere einen automatischen Ausgleich von Abstandstoleranzen zu den Mündungen der Blasformkavitäten, wie es beispielsweise in der WO 01/62472 A1 der Anmelderin beschrieben ist, die hiermit als Beispiel für die Höhenverstellbarkeit der Blasdorne 8 zum integralen Bestandteil der vorliegenden Anmeldung erklärt wird.

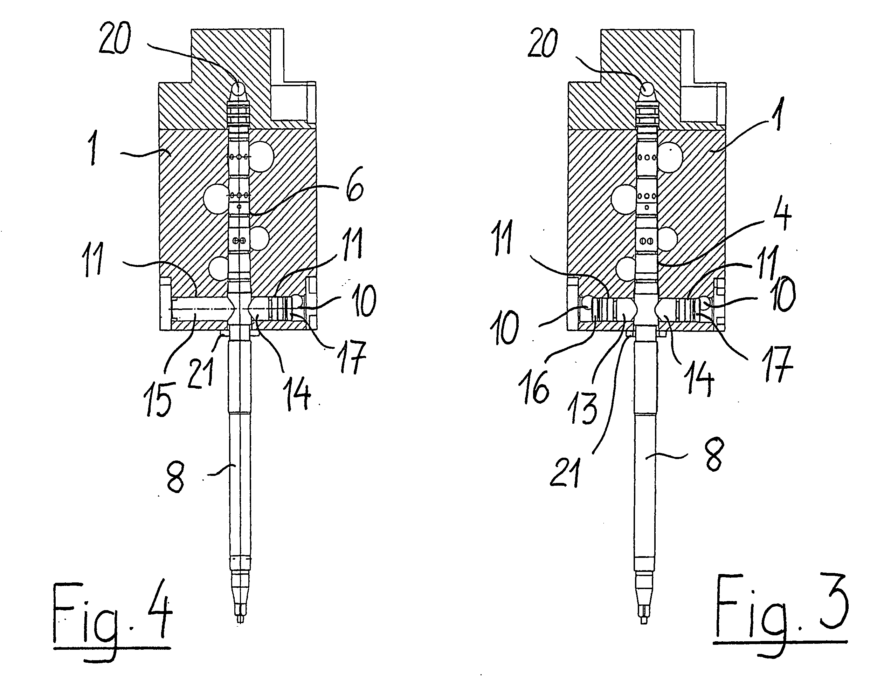

Fig. 3 zeigt im vergrösserten Massstab eine radiale Klemmeinrichtung für einen in einer Aufnahmebohrung 4 im Maschinenoberteil 1 montierten Blasdorn 8. Die Klemmeinrichtung umfasst zwei Klemmbacken 13, 14, die einander diametral gegenüberliegend in radialen Bohrungen 11 des Maschinenoberteils 1 montiert sind und am Umfang des Blasdorns 8 anliegen. Die Anlageflächen der Klemmbacken 13, 14, sind dabei mit Vorteil konkav ausgebildet und weisen eine Krümmung auf, die der Krümmung der Umfangsfläche des Blasdorns 8 angepasst ist. Die Klemmbacken 13, 14 sind mit Stellkolben 16, 17 verbunden, die in direktem Kontakt mit dem vorzugsweise hydraulischen Kopplungsmedium stehen und die radialen Bohrungen 11 gegenüber dem Kopplungsmedium abdichten. Die Verteilkanäle, über welche das Kopplungsmedium zu den Stellkolben 16,17 gelangt, sind mit dem Bezugszeichen 10 angedeutet. Mit dem Bezugszeichen 20 ist das getrennte Bohrungssystem für die gekoppelte Höhenverstellbarkeit der Blasdorne 8 bezeichnet.

Fig. 4 zeigt in einer zu Fig. 3 analogen Darstellung eine Variante der Erfindung, bei der der Blasdorn 8 nur einseitig von einem Klemmbacken 14 beaufschlagt ist. An der diametral gegenüberliegenden Seite liegt der Umfang des Blasdorns 8 an einem Anschlag 15 an. Der Anschlag 15 kann als Fixanschlag ausgebildet sein oder radial verstellbar sein. Vorzugsweise wird für den Anschlag 15 ein Material gewählt, das gegenüber dem Blasdornmaterial einen geringe Reibung aufweist. Dies erweist sich vorteilhaft für den Verschleiss der Blasdorne bzw. der Aufnahmebohrungen. Der beispielsweise in der Aufnahmebohrung 6 im Maschinenoberteil 1 montierte Blasdorn 8 wird zwischen dem Anschlag 15 und der mit einem Stellkolben 17 verbundenen Klemmbacke 14 geklemmt. Der Stellkolben 17 dichtet die radiale Bohrung 11 gegenüber dem Kopplungsmedium ab. Bei dieser vereinfachten Ausführungsvariante zweigt von der zentralen Versorgungsbohrung des Bohrungssystems nur ein Verteilkanal 10 ab, der das Kopplungsmedium an die einseitig angeordneten Klemmbacken 14 mit Stellkolben 17 heranführt. Mit dem Bezugszeichen 20 ist wiederum das getrennte Bohrungssystem für die gekoppelte Höhenverstellbarkeit der Blasdorne 8 bezeichnet.

Bei der Montage werden die Blasdorne 8 von unten in die vertikalen Aufnahmebohrungen eingesteckt. Am Schaft der Blasdorne 8 angeordnete Dichtungs-O-Ringe sorgen für eine provisorische Halterung der Blasdorne 8 in den Aufnahmebohrungen. Im drucklosen Zustand verbleiben die Klemmbacken 13, 14 im wesentlichen in ihrer Klemmstellung und sorgen für eine zusätzliche Sicherung der Blasdorne 8 gegen ein unbeabsichtigtes Herausfallen. Die Klemmkraft der Klemmbacken 13, 14 im unbelasteten Zustand kann aber durch Schub oder Zug von Hand sehr einfach überwunden werden. Es können auch Rückstellmittel, beispielsweise Rückstellfedern oder dergleichen vorgesehen sein, um die Klemmbacken 13, 14 im unbelasteten Zustand ausser Eingriff mit den Umfangsflächen der Blasforne 8 zu bringen. Um ein Herausfallen der Blasdorne 8 gänzlich zu unterbinden, beispielsweise für den Fall, dass das im Bohrungssystem 9, 10 befindliche Kopplungsmedium plötzlich drucklos wird, können an der Unterseite des Maschinenoberteils etwa U-förmige Flansche 21 montiert sein. Die Flansche 21 greifen an einer verjüngten Stelle der Blasdomschafts an und dienen als Fixanschlag.

Die zentrale Halterung der Blasdorne 8 über ein Kopplungsmedium reduziert den Aufwand für die Wartung, beispielsweise den Ausbau, oder für eine Lageveränderung der Blasdorne 8. Es muss nicht mehr die Halterung eines jeden der betroffenen Blasdorne 8 gelöst werden. Es genügt eine zentrale Manipulation des im zusammenhängenden Bohrungssystem 9, 10 des Maschinenoberteils 1 angeordneten Kopplungsmediums, um die Halterung aller Blasdorne 8 zu lösen bzw. wieder zu aktivieren. Gegebenenfalls kann es auch erforderlich sein, Fixanschläge zu entfernen, damit die Blasdorne herausgezogen werden können. Durch die zentrale Verstellbarkeit ist auch die Voraussetzung für eine einfache Veränderung der Klemmkraft für die Blasdorne 8 gegeben. Dabei ist durch das Kopplungsmedium und die praktisch identische Ausbildung der Bohrungen gewährleistet, dass jeder Blasdorn 8 im wesentlichen mit der gleichen Klemmkraft gehalten wird. Die Halterung der Blasdorne 8 erfolgt durch eine Druckveränderung des innerhalb des Bohrungssystems 9, 10 des Maschinenteils 1 angeordneten Kopplungsmediums. Von aussen axial verstellbare Klemmmuttern oder dergleichen Klemmmittel an jedem Blasdorn 8 entfallen. Dies hat auch den Vorteil, dass durch die Klemmung der Blasdorne 8 deren relative Höhenlage nicht beeinträchtigt wird. Das Kopplungsmedium kann ein gasförmiges oder ein flüssiges Medium sein. Vorzugsweise wird eine Hydraulikflüssigkeit eingesetzt. Die Kopplung der Halterungen über eine Hydraulikflüssigkeit erlaubt eine sehr einfache Regelung der Klemmung der Blasdorne 8 mit Hilfe erprobter Einrichtungen. Für die Hydraulikflüssigkeit kann eine Entgasungseinrichtung vorgesehen sein.

In einer nicht näher dargestellten alternativen Ausführungsform der Erfindung umfasst die Klemmeinrichtung für die Blasdorne jeweils ein radial komprimierbares Klemmelement, das mit einem pneumatisch oder hydraulisch axial zustellbaren Stempel zusammenwirkt. Eine vorteilhafte Variante dieser Ausführungsform benutzt dabei im wesentlichen Elemente, die bereits bei axialen Halterungen aus dem Stand der Technik (z.B. WO 01/62472) bekannt sind. Dabei ist das radial komprimierbare Klemmelement als ein mit einer konischen Gegenfläche versehener, geschlitzter Kegel aus einem elastischen und verschleissfesten Material, vorzugsweise einem technischen Kunststoff, ausgebildet. Der axial zustellbare Stempel weist eine korrespondierende Gegenfläche auf, die beim axialen Zustellen mit der Kegelfläche zusammenwirkt. Bei diesem vorteilhaften Ausführungsbeispiel ersetzt der axial zustellbare Stempel die sonst erforderliche, in eine Gewindebohrung einschraubbare Haltemutter. Die konische Wirkfläche der Haltemutter ist durch die konische Gegenfläche am Druckkolben ersetzt.

## Patentansprüche

1. Halterung für die Blasdorne (8) einer Blasformeinrichtung, die ein Maschinenunterteil, in dem Blasformwerkzeuge mit Blasformkavitäten angeordnet sind, und ein oberhalb des Maschinenunterteils angeordnetes Maschinenoberteil (1) aufweist, in dem eine Anzahl von Blasdornen (8) durch radiale Klemmung gehaltert ist, wobei die Blasdorne (8) gemeinsam axial auf die Blasformwerkzeuge zustellbar und in eine Mündung der Kavitäten einfahrbar sind, **dadurch gekennzeichnet, dass** die Halterung der Blasdorne (8) frei ist von axial verstellbaren, mechanischen Vorspannmitteln und Klemmungeinrichtungen (13, 14; 14, 15) umfasst, die über ein gemeinsames Kopplungsmedium betätigbar sind.

2. Halterung nach Anspruch 1, **dadurch gekennzeichnet, dass** das Kopplungsmedium ein gasförmiges oder ein flüssiges Medium, vorzugsweise eine Hydraulikflüssigkeit ist.

3. Halterung nach Anspruch 1 oder 2, **dadurch gekennzeichnet, dass** die Klemmeinrichtungen im wesentlichen radial zustellbar sind und das Kopplungsmedium in einem zusammenhängenden Bohrungssystem (9, 10) des Maschinenoberteils angeordnet ist.

4. Halterung nach einem der Ansprüche 1 bis 3, **dadurch gekennzeichnet, dass** jeder Blasdorn (8) von wenigstens einer radial zustellbaren Klemmbacke (14) geklemmt ist, die über das Kopplungsmedium druckbeaufschlagt ist und den Blasdorn (8) gegen einen gegenüberliegenden Anschlag (15) presst.

5. Halterung nach Anspruch 4, **dadurch gekennzeichnet, dass** der Anschlag (15) radial verstellbar ist.

6. Halterung nach einem der Ansprüche 1 bis 3, **dadurch gekennzeichnet, dass** jeder Blasdorn (8) von zwei radial zustellbaren Klemmbacken (13, 14) gehalten ist, die vom Kopplungsmedium druckbeaufschlagt sind und an einander, vorzugsweise diagonal,gegenüberliegenden Seiten des Umfang des Blasdorns (8) angeordnet sind.

7. Halterung nach einem der Ansprüche 4 bis 6, **dadurch gekennzeichnet, dass** die radial zustellbaren Klemmbacken (13, 14; 14) mit Stellkolben (16, 17; 17) zusammenwirken, die in direktem Kontakt mit dem Kopplungsmedium in Bohrungen (11) im Maschinenoberteil (1) verschiebbar geführt sind.

8. Halterung nach einem der vorangehenden Ansprüche, **dadurch gekennzeichnet, dass** ein Speicher für das Kopplungsmedium vorgesehen ist.

9. Halterung nach einem der Ansprüche 3 - 8, **dadurch gekennzeichnet, dass** der Druck des Kopplungsmediums innerhalb der Bohrungen (9, 10) im Maschinenoberteil (1) zentral verstellbar, vorzugsweise stufenlos regelbar, ist.

10. Halterung nach Anspruch 9, **dadurch gekennzeichnet, dass** der Druck des Kopplungsmediums über einen Druckkolben (19) veränderbar ist, der mechanisch über eine Stellschraube (18), einen Hebel oder dergleichen, oder pneumatisch betätigbar ist.

11. Halterung nach Anspruch 1 oder 2, **dadurch gekennzeichnet, dass** die Klemmeinrichtung für die Blasdorne jeweils ein radial komprimierbares Klemmelement umfasst, das mit einem pneumatisch oder hydraulisch axial zustellbaren Stempel zusammenwirkt.

12. Halterung nach Anspruch 11, **dadurch gekennzeichnet, dass** das radial komprimierbare Klemmelement als ein mit einer konischen Gegenfläche versehener, geschlitzter Kegel aus einem elastischen und verschleissfesten Material, vorzugsweise einem technischen Kunststoff, ausgebildet ist und der axial zustellbare Stempel eine korrespondierende Gegenfläche aufweist, die beim axialen Zustellen mit der Kegelfläche zusammenwirkt.

13. Halterung nach einem der vorangehenen Ansprüche, **dadurch gekennzeichnet, dass** eine Druckbegrenzereinrichtung für das Kopplungsmedium vorgesehen ist.

14. Halterung nach einem der vorangehenden Ansprüche, **dadurch gekennzeichnet, dass** die Klemmung der Blasdorne (8) mit einer Klemmkraft erfolgt, die gerade so gross ist, dass beim Zustellen der Blasdorne (8) auf die Blasformwerkzeuge eine axiale Verstellbarkeit der Blasdorne (8) innerhalb vorgebbarer Grenzen gewährleistet ist.

15. Halterung nach Anspruch 14, **dadurch gekennzeichnet, dass** die axiale Höhenverstellung der Blasdorne (8) gegen den Widerstand eines, vorzugsweise hydraulischen, Kopplungsmittels erfolgt, über welches die Höhenverstellbarkeit der Blasdorne (8) untereinander gekoppelt ist.

## Claims

1. A mounting for the blowing mandrels (8) of a blow-moulding device which has a lower machine part, in which blow-moulding tools with blow-moulding cavities are arranged, and an upper machine part (1) arranged above the lower machine part, in which upper part a number of blowing mandrels (8) are mounted by radial clamping, the blowing mandrels (8) being capable of being axially positioned jointly onto the blow-moulding tools and capable of being inserted into an orifice of the cavities, **characterised in that** the mounting of the blowing mandrels (8) is free from axially adjustable mechanical prestressing means and includes clamping devices (13, 14; 14, 15) that are capable of being actuated via a common coupling medium.

2. Mounting according to Claim 1, **characterised in that** the coupling medium is a gaseous or a liquid medium, preferably a hydraulic fluid.

3. Mounting according to Claim 1 or 2, **characterised in that** the clamping devices are substantially capable of being positioned radially, and the coupling medium is arranged in a continuous bore system (9, 10) of the upper part of the machine.

4. Mounting according to one of Claims 1 to 3, **characterised in that** each blowing mandrel (8) is clamped by at least one radially positionable clamping jaw (14) which is pressurised via the coupling medium and which presses the blowing mandrel (8) against an opposite stop (15).

5. Mounting according to Claim 4, **characterised in that** the stop (15) is radially adjustable.

6. Mounting according to one of Claims 1 to 3, **characterised in that** each blowing mandrel (8) is retained by two radially positionable clamping jaws (13, 14) which are pressurised by the coupling medium and are arranged on opposite sides, preferably located diagonally opposite one another, of the periphery of the blowing mandrel (8).

7. Mounting according to one of Claims 4 to 6, **characterised in that** the radially positionable clamping jaws (13, 14; 14) interact with set pistons (16, 17; 17) which are guided displaceably, in direct contact with the coupling medium, in bores (11) in the upper machine part (1).

8. Mounting according to one of the preceding claims, **characterised in that** a reservoir for the coupling medium is provided.

9. Mounting according to one of Claims 3 to 8, **characterised in that** the pressure of the coupling medium within the bores (9, 10) in the upper machine part (1) is centrally adjustable, preferably capable of being regulated in continuously variable manner.

10. Mounting according to Claim 9, **characterised in that** the pressure of the coupling medium is capable of being changed via a pressure piston (19) which is capable of being actuated mechanically via a set screw (18), a lever or such like, or pneumatically.

11. Mounting according to Claim 1 or 2, **characterised in that** the clamping device for the blowing mandrels includes, in each instance, a radially compressible clamping element which interacts with a punch that is capable of being axially positioned pneumatically or hydraulically.

12. Mounting according to Claim 11, **characterised in that** the radially compressible clamping element takes the form of a slotted cone which is provided with a conical mating surface and which is made of an elastic and wear-resistant material, preferably an engineering plastic, and the axially positionable punch exhibits a corresponding mating surface which interacts with the conical face in the course of the axial positioning.

13. Mounting according to one of the preceding claims, **characterised in that** a pressure-limiting device for the coupling medium is provided.

14. Mounting according to one of the preceding claims, **characterised in that** the clamping of the blowing mandrels (8) is effected with a clamping force that is just sufficiently large that in the course of positioning the blowing mandrels (8) onto the blow-moulding tools an axial adjustability of the blowing mandrels (8) within predeterminable limits is guaranteed.

15. Mounting according to Claim 14, **characterised in that** the axial adjustment in height of the blowing mandrels (8) is effected contrary to the resistance of a coupling means, preferably a hydraulic coupling means, via which the adjustability in height of the blowing mandrels (8) amongst themselves is coupled.

## Revendications

1. Dispositif de maintien des mandrins de soufflage (8) d'un équipement de soufflage sur matrice qui présente une partie inférieure de machine, dans laquelle sont disposés des outils de soufflage sur matrice comportant des cavités de moule de soufflage, et une partie supérieure de machine (1) disposée au-dessus de la partie inférieure de machine, dans laquelle est maintenu par serrage radial un certain nombre de mandrins de soufflage (8), les mandrins de soufflage (8) pouvant être avancés simultanément en sens axial sur les outils de soufflage sur matrice et introduits dans une embouchure des cavités, **caractérisé en ce que** le dispositif de maintien des mandrins de soufflage (8) ne comporte pas de moyens mécaniques de précontrainte réglables en sens axial et comprend des dispositifs de serrage (13, 14 ; 14, 15) qui peuvent être actionnés par l'intermédiaire d'un fluide d'accouplement commun.

2. Dispositif de maintien selon la revendication 1, **caractérisé en ce que** le fluide d'accouplement est un fluide sous forme gazeuse ou liquide, de préférence un liquide hydraulique.

3. Dispositif de maintien selon la revendication 1 ou 2, **caractérisé en ce que** les dispositifs de serrage peuvent être avancés sensiblement en sens radial, et **en ce que** le fluide d'accouplement est agencé dans un système d'alésages (9, 10) imbriqué de la partie supérieure de machine.

4. Dispositif de maintien selon l'une des revendications 1 à 3, **caractérisé en ce que** chaque mandrin de soufflage (8) est serré par au moins une mâchoire de serrage (14) à avance radiale, qui est soumise à une pression par l'intermédiaire du fluide d'accouplement et qui comprime le mandrin de soufflage (8) contre une butée (15) opposée.

5. Dispositif de maintien selon la revendication 4, **caractérisé en ce que** la butée (15) est réglable en sens radial.

6. Dispositif de maintien selon l'une des revendications 1 à 3, **caractérisé en ce que** chaque mandrin de soufflage (8) est maintenu par deux mâchoires de serrage (13, 14) à avance radiale, qui sont soumises à une pression par le fluide d'accouplement et qui sont disposées sur des côtés de la circonférence du mandrin de soufflage (8), de préférence diagonalement opposés.

7. Dispositif de maintien selon l'une des revendications 4 à 6, **caractérisé en ce que** les mâchoires de serrage à avance radiale (13, 14 ; 14) interagissent avec des pistons de réglage (16, 17 ; 17) qui sont guidés de manière coulissante en contact direct avec le fluide d'accouplement dans des alésages (11) prévus dans la partie supérieure de machine (1).

8. Dispositif de maintien selon l'une des revendications précédentes, **caractérisé en ce qu'**est prévue une réserve de fluide d'accouplement.

9. Dispositif de maintien selon l'une des revendications 3 à 8, **caractérisé en ce que** la pression du fluide d'accouplement à l'intérieur des alésages (9, 10) prévus dans la partie supérieure de machine (1) est réglable de manière centralisée, de préférence réglable de manière progressive.

10. Dispositif de maintien selon la revendication 9, **caractérisé en ce que** la pression du fluide d'accouplement peut être modifiée par l'intermédiaire d'un piston de pression (19) qui peut être actionné mécaniquement par l'intermédiaire d'une vis de réglage (18), d'un levier ou d'un organe similaire, ou pneumatiquement.

11. Dispositif de maintien selon la revendication 1 ou 2, **caractérisé en ce que** chaque dispositif de serrage des mandrins de soufflage comprend un élément de serrage compressible en sens radial qui interagit avec un poinçon à avance axiale pneumatique ou hydraulique.

12. Dispositif de maintien selon la revendication 11, **caractérisé en ce que** l'élément de serrage compressible en sens radial est réalisé sous la forme d'un cône fendu muni d'une surface antagoniste conique, constitué d'un matériau élastique et résistant à l'usure, de préférence une matière plastique industrielle, et **en ce que** le poinçon à avance axiale présente une surface antagoniste correspondante qui interagit avec la surface conique lors de l'avance axiale.

13. Dispositif de maintien selon l'une des revendications précédentes, **caractérisé en ce qu'**est prévu un dispositif limiteur de pression pour le fluide d'accouplement.

14. Dispositif selon l'une des revendications précédentes, **caractérisé en ce que** le serrage des mandrins de soufflage (8) se fait avec une force de serrage qui est précisément d'un niveau propre à assurer, lors de l'avance des mandrins de soufflage (8) sur les outils de soufflage sur matrice, une réglabilité des mandrins de soufflage (8) en sens axial à l'intérieur de limites prescriptibles.

15. Dispositif de maintien selon la revendication 14, **caractérisé en ce que** le réglage en hauteur des mandrins de soufflage (8) en sens axial se fait à l'encontre de la résistance d'un moyen d'accouplement, de préférence hydraulique, par l'intermédiaire duquel la réglabilité en hauteur des mandrins de soufflage (8) est couplée mutuellement.
